(19)

Europäisches
Patentamt
European
Patent Office
Office européen
des brevets

(11)     **EP 4 513 659 A1**

(12)     **EUROPEAN PATENT APPLICATION**
published in accordance with Art. 153(4) EPC

(43) Date of publication:
26.02.2025  Bulletin 2025/09

(21) Application number: 22953825.1

(22) Date of filing: 07.11.2022

(51) International Patent Classification (IPC):
*H01M 50/531* (2021.01)       *H01M 50/543* (2021.01)
*H01M 50/147* (2021.01)

(52) Cooperative Patent Classification (CPC):
Y02E 60/10

(86) International application number:
PCT/CN2022/130212

(87) International publication number:
WO 2024/027034 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  04.08.2022  CN 202210929978

(71) Applicants:
• Jiangsu Contemporary Amperex Technology
Limited
Changzhou, Jiangsu 213300 (CN)
• Contemporary Amperex Technology Co., Limited
Ningde, Fujian 352100 (CN)

(72) Inventors:
• XIE, Yongfeng
hangzhou, Jiangsu 213300 (CN)
• LI, Quankun
hangzhou, Jiangsu 213300 (CN)
• ZHOU, Wenlin
hangzhou, Jiangsu 213300 (CN)
• LIU, Wenzhong
hangzhou, Jiangsu 213300 (CN)
• WANG, Liqin
hangzhou, Jiangsu 213300 (CN)

(74) Representative: Ran, Handong et al
Maucher Jenkins
Seventh Floor Offices
Artillery House
11-19 Artillery Row
London SW1P 1RT (GB)

(54)     **END CAP ASSEMBLY, BATTERY CELL, BATTERY AND ELECTRIC DEVICE**

(57)     Disclosed in the present application are an end cap assembly, a battery cell, a battery and an electric device. The end cap assembly of the present application comprises: an end cap, which is provided with a first through hole; and an electrode leading-out member, which comprises a connecting plate and a pole terminal protruding from a surface of the connecting plate, wherein at least a part of the pole terminal is arranged in the first through hole, the connecting plate is positioned at one side of the end cap, and the connecting plate is used for being connected to a tab of the electrode assembly. **In** the technical solution of the embodiments of the present application, since the electrode leading-out member is arranged, a contact area between a pole and the tab is increased, an overcurrent area between the pole terminal and the connecting plate is increased, the internal resistance is reduced, and the temperature rise is reduced, such that the safety performance of the battery cell is improved.

Fig. 3

EP 4 513 659 A1

**Description**

**CROSS-REFERENCE TO RELATED APPLICATIONS**

The present application claims priority to Chinese Patent Application No. 202210929978.0, entitled "END COVER ASSEMBLY, BATTERY CELL, BATTERY, AND ELECTRIC APPARATUS" and filed on August 4, 2022, which is incorporated herein by reference in its entirety.

**TECHNICAL FIELD**

The present application relates to the field of batteries, in particular to an end cover assembly, a battery cell, a battery, and an electric apparatus.

**BACKGROUND**

Batteries are widely used in electronic devices, such as mobile phones, laptops, electric scooters, electric cars, electric airplanes, electric ships, electric toy cars, electric toy ships, electric toy planes, and electric tools. The batteries may include cadmium nickel batteries, hydrogen nickel batteries, lithium-ion batteries, secondary alkaline zinc manganese batteries, and the like.

In the development of battery technologies, besides improvement of the performance of batteries, how to improve the safety performance and mounting efficiency of the batteries is also one of the research focuses in the art.

**SUMMARY**

In view of the above problems, the present application provides an end cover assembly, a battery cell, a battery, and an electric apparatus, which can improve the safety performance and efficiency of the battery.

In a first aspect, the present application provides an end cover assembly, including: an end cover and an electrode leading-out member. The end cover is provided with a first through hole. The electrode leading-out member includes a connecting plate and a post terminal protruding from a surface of the connecting plate, at least part of the post terminal is disposed in the first through hole, and the connecting plate is located on one side of the end cover, where the connecting plate is connected to a tab of an electrode assembly.

In the technical solution of the embodiment of the present application, the post terminal is disposed in the electrode leading-out member, which expands overcurrent area between the post terminal and the connecting plate, reduces internal resistance, lowers temperature rise, and improves the safety performance of a battery cell.

In some embodiments, the connecting plate and the post terminal are integrally formed, the connecting plate is provided with a welding region, and the welding region is connected to the tab. In the above configuration, the connecting plate and the post terminal are integrally formed, which improve the stability of connection between the post terminal and the connecting plate and the convenience of assembly. Moreover, by providing the welding region on the connecting plate and connecting the connecting plate with the tab, the stability of connection can be improved.

In some embodiments, the post terminal includes a main body extending in a thickness direction of the end cover and a first protrusion protruding from an outer peripheral surface of the main body along a radial direction of the main body, and at least part of the first protrusion is disposed in the first through hole. In the above technical solution, the first protrusion is provided to reduce an active clearance between the post terminal and the end cover and improve the stability of the post terminal.

In some embodiments, the first protrusion is disposed surrounding an entire circumference of the main body.

The end cover assembly further includes a sealing member disposed at least partially surrounding an outer periphery of the first protrusion, and at least part of the sealing member is disposed in the first through hole. In the above technical solution, the sealing member is provided to insulate the post terminal and the end cover.

In some embodiments, the end cover assembly further includes: a terminal plate disposed on a side, away from the connecting plate, of the end cover and connected to the post terminal; and an insulating member disposed surrounding the post terminal, and at least part of the insulating member is disposed between the terminal plate and the end cover.

By providing the terminal plate to fix the post terminal, and providing the insulating member to insulate the post terminal and the end cover, it can prevent electrical energy of the battery cell from leaking.

In some embodiments, the terminal plate is provided with a second through hole, the terminal plate includes a first snapping portion protruding from a wall of the second through hole and in an annular shape, the post terminal further includes a second protrusion protruding from the outer peripheral surface of the main body and in an annular shape, and the second protrusion is spaced apart from the first protrusion, where the first snapping portion is connected between the first protrusion and the second protrusion in a snap-fit manner.

By providing the first snapping portion and the second protrusion, the post terminal and the terminal plate are connected in the snap-fit manner, thereby increasing the overcurrent area between the terminal plate and the post terminal and improving the safety of the battery cell.

In some embodiments, the insulating member includes a body portion and a blocking portion, at least part of the body portion is disposed between the terminal plate and the end cover, and the blocking portion protrudes from a side, away from the terminal plate, of the body portion, extends into the first through hole, and is disposed between the end cover and the post terminal.

The blocking portion extends into the first through hole and is disposed between the end cover and the post terminal, which improves the insulating performance between the terminal plate and the post terminal.

In some embodiments, the blocking portion extends axially along the first through hole and abuts against the sealing member. The above configuration further enhances blocking between the end cover and the post terminal, and thus improves the insulating effect.

In some embodiments, the sealing member includes a sealing portion disposed between the post terminal and the end cover and a connecting portion disposed surrounding an outer periphery of the sealing portion, and at least part of the connecting portion is disposed between the end cover and the connecting plate. In the above configuration, the connecting portion is disposed between the end cover and the connecting plate, thereby achieving an insulation between the end cover and the connecting plate.

In some embodiments, the connecting plate includes an extension portion extending outward in a length direction or width direction of the end cover from one side of the connecting plate. The extension portion increases the welding area of the tab, and improves the efficiency and stability of connection.

In some embodiments, a distance between an axis of the post terminal and a geometric center of the connecting plate in the length direction of the end cover is greater than zero. The post terminal is eccentrically disposed on the connecting plate, which can make full use of the space of the end cover assembly to dispose the connecting plate, increase the area of the connecting plate, and improve the stability of connection between the tab and the connecting plate.

In some embodiments, the extension portion extends in the length direction of the end cover from one side of the connecting plate; in the length direction of the end cover, the connecting plate includes a first edge and a second edge opposite each other, the first edge is located in the extension portion, and a distance between the first edge and the axis of the post terminal is greater than that between the second edge and the axis of the post terminal, so that the connecting plate is eccentrically disposed relative to the post terminal. The connecting plate is eccentrically disposed relative to the post terminal, which can effectively use the space between the electrode assembly and the end cover, increase the welding area of the tab, ensure the stability of connection for the tab, increase the overcurrent area, reduce internal resistance and temperature rise, and improve the stability and safety of the battery cell.

In some embodiments, the extension portion is provided with a first weight reduction portion, and a thickness of the first weight reduction portion is less than that of the connecting plate. The first weight reduction portion effectively reduces the weight of the extension portion and increases the energy density of the battery cell.

In some embodiments, an edge of the connecting plate is recessed inward to form a second weight reduction portion. The above technical solution is simple in structure and easy to implement.

In some embodiments, an edge of the extension portion is recessed inward to form a third weight reduction portion. The above technical solution is simple in structure and easy to implement.

In some embodiments, a minimum distance $H2$ between the third weight reduction portion and the post terminal satisfies a relationship of $H2 \geq 2$ mm. By providing the range of the minimum distance between the third weight reduction portion and the post terminal, it can ensure the overcurrent area of the connecting plate, while reducing the overall weight of the electrode leading-out member and increasing the energy density of the battery cell.

In some embodiments, in the width direction of the end cover, an extension length $L1$ of the connecting plate, an extension length $L2$ of the third weight reduction portion, and an extension length $L3$ of the welding region satisfy a relationship: $L2 \leq L1 - 2(L3 + 3)$, where $L1$, $L2$, and $L3$ are calculated in millimeters. The above technical solution can ensure the welding area of the welding region on the connecting plate, and meanwhile, reduce the weight of the connecting plate, and achieve the technical effects of reasonably reducing the weight and increasing the energy density of the battery cell.

In some embodiments, the end cover assembly further includes an insulating plate, the insulating plate is provided with a third through hole, at least part of the post terminal is disposed in the third through hole, the insulating plate is disposed on a side, facing the electrode assembly, of the end cover, and at least part of the insulating plate is disposed between the connecting plate and the end cover. By providing the insulating plate, the insulation between the end cover and the electrode assembly can be achieved.

In some embodiments, edges on two opposite sides of the insulating plate extend towards the electrode assembly to form protruding portions. The protruding portions are disposed on the two sides of the insulating plate, which can define an accommodating space between the end cover and the electrode assembly, thereby facilitating the disposing of the connecting plate and further ensuring the safety of the battery cell.

In some embodiments, a maximum distance between a projection of the protruding portion on the end cover and an edge of the end cover is C, and C ≥ 8.5 mm. The distance C determines an extension length of the protruding portion in the length direction of the end cover. Excluding the thickness of 1.5 mm of the edge of the end cover, the extension length of the protruding portion in the length direction of the end cover is greater than or equal to 7 mm. When the extension length of the protruding portion is too small, the electrode assembly may be cut and damaged. Therefore, a reasonable length of the protruding portion can ensure the safety performance of the electrode assembly.

In some embodiments, in the width direction of the end cover, an extension length of the connecting plate is C1 (D6), two welding regions are provided and disposed in the width direction of the end cover, a maximum distance between the two welding regions in the width direction of the end cover is A1, and C1 ≥ A1 + 4 mm. According to the above technical solution, a reasonable length of the non-welding region on the connecting plate is provided, which reserves a sufficient margin for a press fitting process of the electrode assembly to ensure smooth assembly of the electrode assembly and improve the safety performance of the battery cell.

In some embodiments, in the length direction of the end cover, an extension length of the welding region is D1, an extension length of the tab is D3, the tab is a positive electrode tab, an extension length of the connecting plate is D2, and D3 ≥ D2 ≥ D1 + 4 mm. In the above configuration, the length of the tab is greater than that of the connecting plate, which can improve the convenience of tab connection, while reducing the occupied space and weight of the connecting plate and ensuring the energy density of the battery cell. In addition, the length of the connecting plate is greater than that of the welding region, which reserves a sufficient margin for the press fitting process of the electrode assembly to ensure smooth assembly of the electrode assembly and improve the safety performance of the battery cell.

In some embodiments, in the length direction of the end cover, a maximum distance between orthogonal projections of edges of two tabs on the end cover is D4, and D1 ≥ (D3 - 2D4)/ 0.8. The length of the welding region comprehensively considers maximum misalignment between the tabs and the length of each tab, and can ensure that all of the stacked tabs can be stably connected to the connecting plate.

In some embodiments, the end cover is further provided with a liquid injection hole, a distance between a center of the liquid injection hole and the edge of the end cover is D5, a distance between a center of the post terminal and the edge of the end cover is A2, the post terminal is a positive post terminal, a minimum distance between the center of the post terminal and a centerline of the connecting plate is A3, and D5 - 0.5D2 - A2 - 3 mm ≥ A3 ≥ A + D4 + 0.5D3 - A2.

The above technical solution comprehensively considers the position of the liquid injection hole, the eccentric distance between the post terminal and the connecting plate, and the maximum misalignment of the two positive electrode tabs, so as to reasonably set the diameter of the positive post terminal, reduce the probability of interference between the positive post terminal and the liquid injection hole, and ensure that the connecting plate does not exceed the edge of the end cover.

In some embodiments, two electrode leading-out members are provided, which are respectively a first electrode leading-out member and a second electrode leading-out member, a pressure relief mechanism is further disposed between the first electrode leading-out member and the second electrode leading-out member, the first electrode leading-out member includes a first connecting plate and a first post terminal, and the second electrode leading-out member includes a second connecting plate and a second post terminal; a length of the end cover is L2, an extension length of the pressure relief mechanism in the length direction of the end cover is L3, a minimum distance between a centerline of the first connecting plate and the edge of the end cover is A5, a minimum distance between a center of the first post terminal and the centerline of the first connecting plate is A6, an extension length of a second tab in the length direction of the end cover is L4, a maximum distance between orthogonal projections of edges of two second tabs on the end cover in the length direction of the end cover is D6, and 0.5(L2 - L3) - A5 - 0.5L4 - 3 mm ≥ A6 ≥ A + L4 + 0.5D6 - A5.

The above technical solution comprehensively considers the length of the end cover, the extension length of the pressure relief mechanism, the lengths of the tabs, and the maximum misalignment of a plurality of second tabs, so as to set a reasonable diameter of the second post terminal, reduce the probability of interference between the second post terminal and the pressure relief mechanism, while ensure that the second connecting plate does not exceed the edge of the end cover.

In a second aspect, the present application further provides a battery cell, including the end cover assembly in the above embodiments.

In a third aspect, the present application further provides a battery, including the battery cell in the above embodiments.

In a fourth aspect, the present application further provides an electric apparatus, which includes the battery in the above embodiments, where the battery is adapted for providing electrical energy.

The above description is only a summary of the technical solutions of the present application. In order to understand the technical means in the present application more clearly, it can be implemented in accordance with the contents of the specification; and in order to make the above and other objectives, features and advantages of the present application more obvious and easier to understand, and the specific embodiments of the present application are cited below.

## DESCRIPTION OF THE DRAWINGS

Features, advantages, and technical effects of exemplary embodiments of the present application will be described below with reference to the accompanying drawings.

Fig. 1 is a schematic structural diagram of a vehicle provided in some embodiments of the present application;
Fig. 2 is an exploded schematic diagram of a battery provided in some embodiments of the present application;
Fig. 3 is an exploded schematic diagram of a battery cell in a battery provided in some embodiments of the present application;
Fig. 4 is an exploded schematic diagram of an end cover assembly in a battery provided in some embodiments of the present application;
Fig. 5 is a schematic structural diagram of an electrode leading-out member of the end cover assembly provided in some embodiments of the present application;
Fig. 6 is a cross-sectional structural diagram of the electrode leading-out member provided in some embodiments of the present application;
Fig. 7 is a cross-sectional structural diagram of the end cover assembly provided in some embodiments of the present application;
Fig. 8 is an enlarged schematic diagram of a circular frame A in Fig. 7;
Fig. 9 is a bottom view of an electrode leading-out member provided in some embodiments of the present application;
Fig. 10 is a schematic structural diagram of an electrode leading-out member provided in some other embodiments of the present application;
Fig. 11 is a schematic structural diagram of an electrode leading-out member provided in still some other embodiments of the present application;
Fig. 12 is a bottom view of an electrode leading-out member provided in some other embodiments of the present application;
Fig. 13 is a schematic structural diagram of an electrode leading-out member provided in some further embodiments of the present application;
FIG. 14 is a schematic structural diagram of an end cover assembly provided in some embodiments of the present application;
Fig. 15 is a cross-sectional structural diagram taken along line B-B in Fig. 14;
Fig. 16 is an enlarged schematic diagram of a circular frame D in Fig. 15; and
Fig. 17 is an enlarged schematic diagram of a circular frame E in Fig. 15.

The accompanying drawings are not drawn to actual scale.
Reference numerals are described as follows:
1. Vehicle; 2. Battery; 21. Opening; 24. Pressure relief mechanism; 25. Electrode terminal; 3. Controller; 4. Motor; 5. Housing; 51. First portion; 52. Second portion; 53. Accommodating space; 30. End cover assembly; 301. End cover; 302. Electrode leading-out member; 303. First through hole; 304. Connecting plate; 305. Post terminal; 306. Main body; 307. First protrusion; 308. Sealing member; 309. Terminal plate; 310. Insulating member; 311. Second through hole; 312. First snapping portion; 313. Second protrusion; 314. Body portion; 315. Blocking portion; 316. Welding region; 317. Extension portion; 318. First weight reduction portion; 319. Second weight reduction portion; 320. Third weight reduction portion; 321. Insulating plate; 322. Third through hole; 323. Protruding portion.

## DETAILED DESCRIPTION

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by the person skilled in the art based on the embodiments of the present application without creative efforts shall fall within the protection scope of the present application.
Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" and any variations thereof in the specification, claims, the above description of the accompanying drawings of the present application are intended to cover non-exclusive inclusion. The terms "first", "second", and the like in the specification, claims or the above description of accompanying drawings of the present application are adapted to distinguish different objects, rather than to describe specific sequences or primary and secondary relationships.

The "embodiment" mentioned in the present application means that specific features, structures or characteristics described in conjunction with the embodiment may be included in at least one embodiment of the present application. This phrase at various locations in the specification does not necessarily refer to the same embodiment, or an independent or alternative embodiment exclusive of another embodiment.

In the description of the present application, it should be noted that, unless otherwise specified and defined, the terms "mount", "connect", "couple", and "attach" should be broadly understood, for example, the terms may refer to a fixed connection, a detachable connection, or an integral connection, may refer to a direct connection, a connection through a medium, or a communication of interiors of two elements. Person skilled in the art may understand the specific meanings of the above terms in the present application according to specific circumstances.

The term "and/or" in the present application refers to merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two or more (including two).

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which are not limited by the embodiments of the present application in this aspect either. The battery cells are generally divided into three types according to packaging manners: cylindrical battery cells, square battery cells and pouch battery cells, which are not limited in the embodiments of the present application in this aspect either.

The battery mentioned in the embodiments of the present application refers to a single physical module that includes one or more battery cells to provide higher voltage and capacity. For example, the battery mentioned in the present application may include a battery module or a battery pack. The battery generally includes a housing for packaging one or more battery cells. The housing may prevent liquid or other foreign matters from affecting charging or discharging of the battery cells.

The battery cell includes an electrode unit and an electrolyte, the electrode unit includes at least one electrode assembly, and the electrode assembly includes a positive electrode plate, a negative electrode plate, and a separator. The battery cell mainly relies on migration of metal ions between the positive electrode plate and the negative electrode plate to work. The positive electrode plate includes a positive current collector and a positive active material layer applied on a surface of the positive current collector; and the positive current collector includes a positive current collecting portion and a positive protrusion protruding from the positive current collecting portion, the positive current collecting portion is coated with the positive active material layer, at least a portion of the positive protrusion is not coated with the positive active material layer, and the positive protrusion serves as a positive tab. Taking a lithium-ion battery as an example, a material for the positive current collector may be aluminum, the positive active material layer includes a positive active material, and the positive active material may be lithium cobalt oxide, lithium iron phosphate, ternary lithium, lithium manganate, or the like. The negative electrode plate includes a negative current collector and a negative active material layer applied on a surface of the negative current collector; and the negative current collector includes a negative current collecting portion and a negative protrusion protruding from the negative current collecting portion, the negative current collecting portion is coated with the negative active material layer, at least a portion of the negative protrusion is not coated with the negative active material layer, and the negative protrusion serves as a negative tab. A material for the negative current collector may be copper, the negative active material layer includes a negative active material, and the negative active material may be carbon, silicon, or the like. In order to ensure that no fusing occurs when high current passes through, a plurality of positive tabs are provided and stacked together, and a plurality of negative tabs are provided and stacked together. A material for the separator may be polypropylene (PP), polyethylene (PE), or the like. Moreover, the electrode assembly may be of a wound structure or a stacking structure, and the embodiments of the present application are not limited thereto.

For convenient description, the following embodiments are described by an example of a vehicle as an electric apparatus.

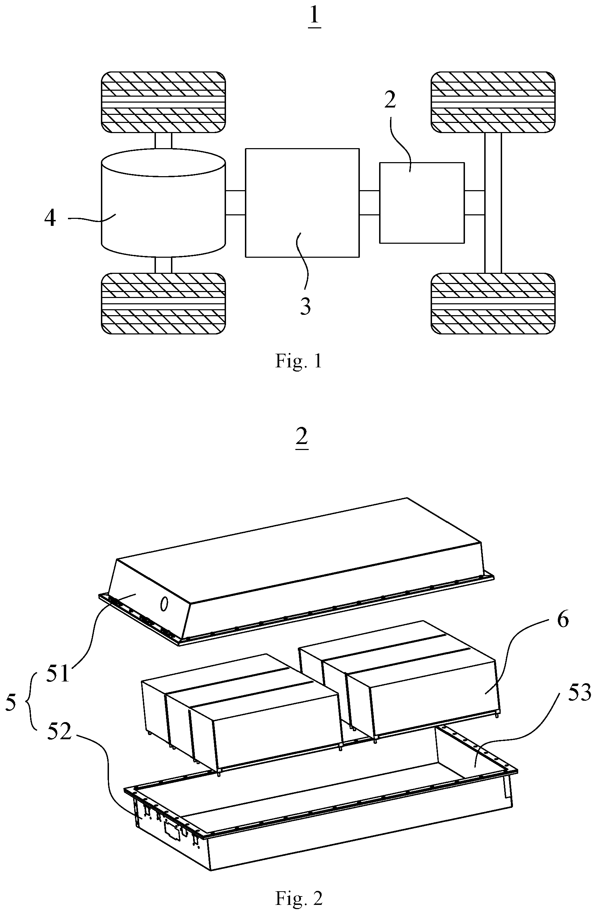

Fig. 1 is a schematic structural diagram of a vehicle provided in some embodiments of the present application. As shown in Fig. 1, a battery 2 is disposed inside the vehicle 1, and the battery 2 may be disposed at a bottom, head, or tail of the vehicle 1. The battery 2 may be used for supplying electrical power to the vehicle 1. For example, the battery 2 may be used as an operation power supply of the vehicle 1.

The vehicle 1 may further include a controller 3 and a motor 4, the controller 3 is used for controlling the battery 2 to supply power to the motor 4, for example, to satisfy a working power demand of the vehicle 1 during startup, navigation and travelling.

In some embodiments of the present application, the battery 2 may be used not only as an operation power supply of the vehicle 1, but also as a driving power supply of the vehicle 1 to replace or partially replace fuel or natural gas to provide driving power for the vehicle 1.

Fig. 2 is an exploded schematic diagram of a battery provided in some embodiments of the present application. As shown in Fig. 2, the battery 2 includes a housing 5 and a battery module 6, a plurality of battery cells form the battery module 6, and the battery module 6 is accommodated in the housing 5.

The housing 5 is used for accommodating the battery cells, and the housing 5 may be of various structures. In some embodiments, the housing 5 may include a first portion 51 and a second portion 52, the first portion 51 and the second portion 52 cover and close each other, and define an accommodating space 53 for accommodating the battery cells together. The second portion 52 may be of a hollow structure with an open end, the first portion 51 is of a plate-like structure, and the first portion 51 covers and closes an open side of the second portion 52 to form the housing 5 with the accommodating space 53; or each of the first portion 51 and the second portion 52 may be of a hollow structure with an open side, and the open side of the first portion 51 covers and closes the open side of the second portion 52 to form the housing 5 with the accommodating space 53. The first portion 51 and the second portion 52 may be in various shapes, such as in cylindrical or cuboid shape.

To improve the sealing property after the first portion 51 is connected to the second portion 52, a sealing member, such as a sealant or a sealing ring, may be disposed between the first portion 51 and the second portion 52.

Assuming that the first portion 51 covers and closes a top of the second portion 52, the first portion 51 may be referred to as an upper housing cover, and the second portion 52 may be referred to as a lower housing body.

There may be one or more battery cells in the battery 2. If a plurality of battery cells are provided, the plurality of battery cells may be connected in series, in parallel, or in hybrid. The hybrid connection refers to a combination of series connection and parallel connection in the plurality of battery cells. The plurality of battery cells may be directly connected in series, in parallel, or in hybrid together, and then an integrity formed by the plurality of battery cells is accommodated in the housing 5; alternatively, the plurality of battery cells may be first connected in series, in parallel, or in hybrid to form a battery module 6, and then a plurality of battery modules 6 are connected in series, in parallel, or in hybrid to form an integrity, which is accommodated in the housing 5.

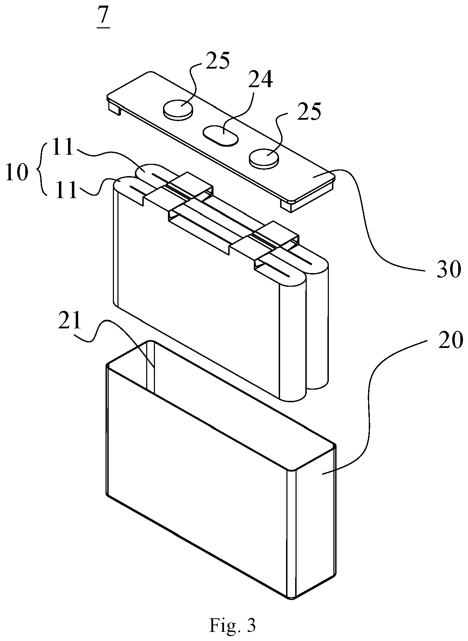

Fig. 3 is an exploded schematic diagram of a battery cell in a battery provided in some embodiments of the present application. In some embodiments, a plurality of battery cells 7 are provided, and the plurality of battery cells 7 are first connected in series, in parallel, or in hybrid to form a battery module 6. Then, a plurality of battery modules 6 are connected in series, in parallel, or in hybrid to form an integrity, which is accommodated in the housing.

The plurality of battery cells 7 in the battery module 6 may be electrically connected through a busbar to achieve the parallel, series, or hybrid connection of the plurality of battery cells 7 in the battery module 6.

The battery cell 7 in the embodiments of the present application includes an electrode unit 10, a shell 20, and an end cover assembly 30. The shell 20 includes an opening 21, the electrode unit 10 is accommodated in the shell 20, and the end cover assembly 30 is connected to the shell 20 and covers and closes the opening 21.

The electrode unit 10 includes at least one electrode assembly 11. For example, the electrode unit 10 in Fig. 3 includes two electrode assemblies 11. The electrode assembly 11 includes a positive electrode plate, a negative electrode plate, and a separator. The electrode assembly 11 may be a wound electrode assembly, a stacking electrode assembly, or an electrode assembly in other forms.

In some embodiments, the electrode assembly 11 is a wound electrode assembly. The positive electrode plate, the negative electrode plate, and the separator are all of strip structures. In the embodiments of the present application, the positive electrode plate, the separator, and the negative electrode plate may be stacked in sequence and wound for more than two turns to form the electrode assembly 11.

In some other embodiments, the electrode assembly 11 is of a stacking electrode assembly. Specifically, the electrode assembly 11 includes a plurality of positive electrode plates and a plurality of negative electrode plates, which are alternately stacked in a direction parallel to a thickness direction of the positive electrode plates and a thickness direction of the negative electrode plates.

The electrode unit 10 includes at least one electrode assembly 11. That is, in the battery cell 7, one or more electrode assemblies 11 may be accommodated in the shell 20.

The shell 20 is of a hollow structure with an open side. The end cover assembly 30 covers and closes the opening 21 of the shell 20 and is connected with the shell 20 in a sealing manner, to form an accommodating cavity for accommodating the electrode unit 10 and an electrolyte.

The shell 20 may be in various shapes, such as in cylindrical or cuboid shapes. The shape of the shell 20 may be determined according to a specific shape of the electrode unit 10. For example, if the electrode unit 10 is of a cylindrical structure, a cylindrical shell may be used; or if the electrode unit 10 is of a cuboid structure, a cuboid shell may be used. The end cover assembly 30 may also be of various structures, such as a plate-like structure or a hollow structure with an open end. For example, the shell 20 is of a cuboid structure, the end cover assembly 30 is of a plate-like structure, and the end cover assembly 30 covers and closes the opening at the top of the shell 20.

The end cover assembly 30 further includes an electrode terminal 25. In some embodiments, two electrode terminals 25 are provided, which are defined as a positive electrode terminal and a negative electrode terminal respectively. The positive electrode terminal and the negative electrode terminal are respectively used for being electrically connected to a positive tab and a negative tab of the electrode assembly 11, so as to output current generated by the electrode assembly 11.

The end cover assembly 30 further includes a pressure relief mechanism 24, which is used for releasing internal pressure or temperature of the battery cell 7 when the internal pressure or temperature of the battery cell 7 reaches a predetermined value. For example, the pressure relief mechanism 24 is located between the positive electrode terminal and the negative electrode terminal, and the pressure relief mechanism 24 may be a component such as an explosion-proof valve, a rupture disc, a gas valve, a pressure relief valve, or a safety valve.

In some embodiments, the shell 20 may alternatively be of a hollow structure with two opposite open sides. Two end cover assemblies 30 are provided, which cover and close two openings of the shell 20 respectively, and are connected to the shell 20 in a sealing manner to form an accommodating cavity for accommodating the electrode unit 10 and an electrolyte. In some examples, the positive electrode terminal and the negative electrode terminal may be mounted on a same end cover assembly 30. In some other examples, the positive electrode terminal and the negative electrode terminal are mounted on two end cover assemblies 30 respectively.

The electrode terminal 25 in the end cover assembly is used for leading out current in the electrode assembly 11. Under normal circumstances, an adapter is disposed in the end cover assembly and connected to the tab. Specifically, the tab extends out from one side of the electrode assembly 11 and is welded to the adapter, and then the adapter is welded to the electrode terminal so as to guide the current in the electrode assembly 11 to the electrode terminal. However, the inventors found that the above configuration results in a relatively low mounting efficiency and also a relatively low yield. After analysis, it was found that the welding between the electrode terminal and the adapter is unstable, resulting in that the above configuration has a relatively small overcurrent area and a relatively high internal resistance; therefore, a portion of the end cover assembly has a relatively high temperature, and the safety is reduced; meanwhile, since the welding operation efficiency is low, the production efficiency of the battery cell is lowered.

In view of the above problems, the inventor designed an end cover assembly, where the end cover assembly is provided with an electrode leading-out member that includes a connecting plate and a post terminal protruding from a surface of the connecting plate, at least a portion of the post terminal is disposed in a first through hole, and the connecting plate is located on one side of an end cover.

According to the technical solutions of the embodiments of the present application, the conventional adapter structure is canceled, and the electrode leading-out member is provided, which increases contact area between the post and the tab, expands overcurrent area between the post terminal and the connecting plate, reduces internal resistance, lowers temperature rise, and improves the safety performance of the battery cell. Moreover, the process of welding the post terminal and the adapter is canceled, which improves the production efficiency of the battery cell.

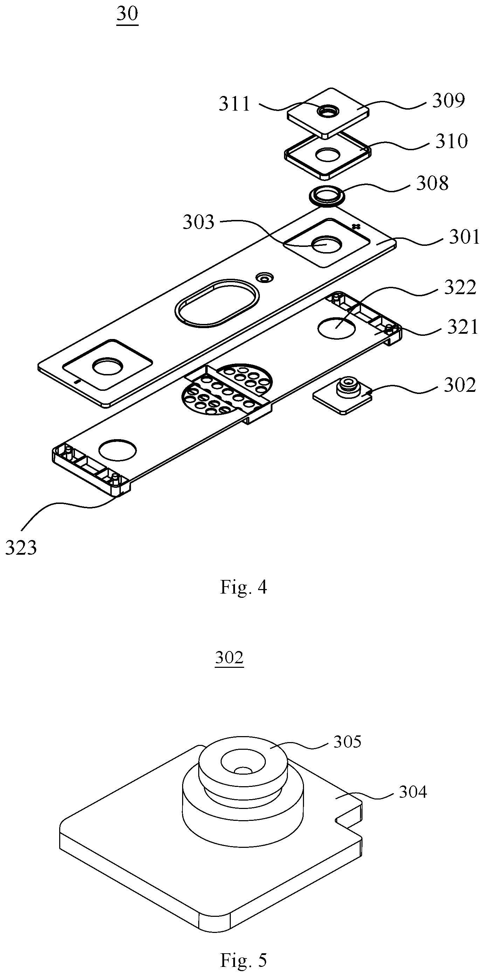

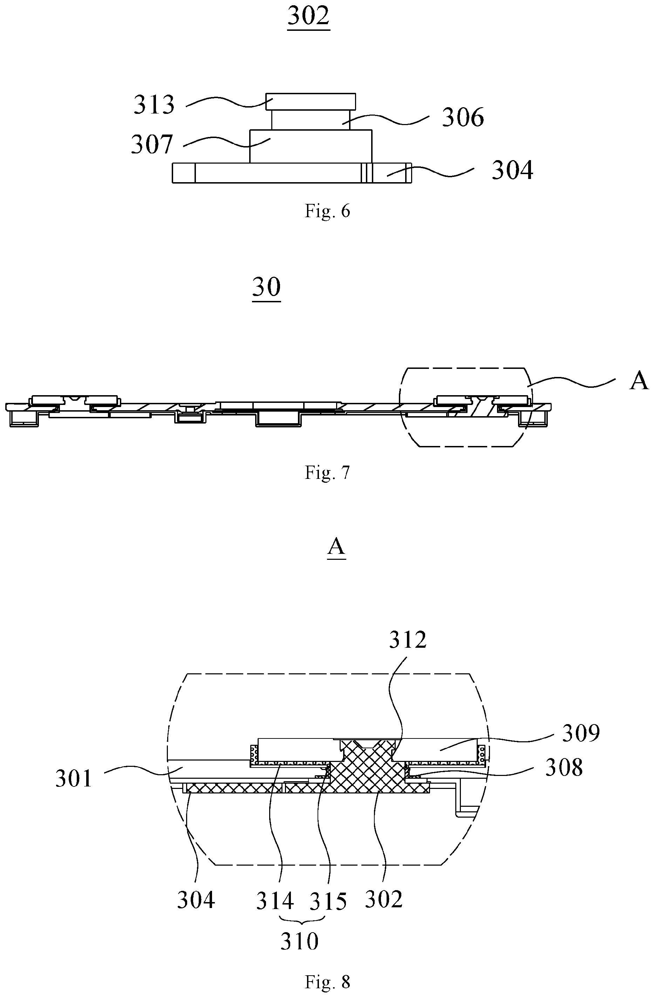

Continue to refer to Fig. 4 to Fig. 8, where Fig. 4 is an exploded schematic diagram of an end cover assembly 30 in a battery 2 provided in some embodiments of the present application; Fig. 5 is a schematic structural diagram of an electrode leading-out member 302 of the end cover assembly 30 provided in some embodiments of the present application; Fig. 6 is a cross-sectional structural diagram of the electrode leading-out member 302 provided in some embodiments of the present application; Fig. 7 is a cross-sectional structural diagram of the end cover assembly 30 provided in some embodiments of the present application; and Fig. 8 is an enlarged schematic diagram of a circular frame A in Fig. 7.

As shown in Fig. 4 and Fig. 5, the end cover assembly 30 in the embodiments of the present application includes: an end cover 301 and an electrode leading-out member 302. The end cover 301 is provided with a first through hole 303; the electrode leading-out member 302 includes a connecting plate 304 and a post terminal 305 protruding from a surface of the connecting plate 304, at least part of the post terminal 305 is disposed in the first through hole 303, and the connecting plate 304 is located on one side of the end cover 30.

The end cover assembly 30 in the embodiments of the present application covers and closes the opening 21 of the shell 20 and is connected with the shell 20 in a sealing manner, to form an accommodating cavity for accommodating the electrode unit 10 and an electrolyte. The end cover 301 is a main body of the end cover assembly 30, and is formed in a flat plate shape. Edges of the end cover 301 are connected to the shell 20 in a sealing manner. The end cover 301 may be made of the same material as the housing 5, generally a metal material with certain strength, to maintain the structure of the accommodating cavity and ensure the safety and stability of the electrode assembly 11 during operation.

In some embodiments, the post terminal 305 is formed as a solid structure made of a conductive material to ensure the overcurrent area of the post terminal 305 and the stability of current transmission. The post terminal 305 may be formed as a columnar structure to facilitate connection with an external electric device or charging device. An end surface, away from the connecting plate 304, of the post terminal 305 is recessed inward to form a recessed portion for connecting with other components or connecting structures. The recessed portion may be provided with internal threads to improve the convenience of connection. The post terminal 305 may be made of a metal material with certain strength, such as copper or aluminum alloy. The connecting plate 304 is formed as a flat plate structure made of a conductive material.

In some embodiments of the present application, the post terminal 305 and the connecting plate 304 of the electrode leading-out member 302 are integrally formed, that is, the electrode leading-out member 302 is an integral and indivisible component. In the above configuration, the post terminal 305 and the connecting plate 304 may be made of the same material, and formed by pouring and cooling in a same mold. Alternatively, it is also available to form the electrode leading-out member 302 by forming a columnar structure on the plate structure, and then machining an outer surface of the columnar structure. The above manufacturing methods are described only for the purpose of explaining the integral forming and are not intended to limit the manufacturing method of the electrode leading-out member 302.

In the technical solutions of the embodiments of the present application, the adapter structure in the end cover assembly 30 is canceled, and the connecting plate 304 and the post terminal 305 are integrally formed, which increases contact area between the post and the tab, expands overcurrent area between the post terminal 305 and the connecting plate 304, reduces internal resistance, lowers temperature rise, and improves the safety performance of the battery cell 7.

In some embodiments of the present application, as shown in Fig. 6, the post terminal 305 includes a main body 306 and a first protrusion 307. The main body 306 extends in a thickness direction of the end cover 301, the first protrusion 307 protrudes from an outer peripheral surface of the main body 306 along a radial direction of the main body 306, and at least part of the first protrusion 307 is disposed in the first through hole 303.

In the above technical solution, by providing the first protrusion 307, an outer diameter of a portion of the post terminal 305 for connecting with the first through hole 303 is increased, an active clearance between the post terminal 305 and the end cover 301 is reduced, and thus the stability of the post terminal 305 is improved.

In some embodiments of the present application, the first protrusion 307 is disposed surrounding an entire circumference of the main body 306. In the above technical solution, by providing the first protrusion 307 in an annular shape, it can ensure the balance of force between the main body 306 and the end cover in a circumferential direction and further improves the structural stability of the post terminal 305.

In some embodiments of the present application, with reference to Figs. 4, 7, and 8, the end cover assembly 30 further includes a sealing member 308 disposed at least partially surrounding an outer periphery of the first protrusion 307, and at least part of the sealing member 308 is disposed in the first through hole 303. The sealing member 308 is made of an insulating material, and the sealing member 308 has elasticity and can deform to some extent; the sealing member 308 may be made of a material such as rubber or silica gel. By providing the sealing member 308, the insulation between the post terminal 305 and the end cover 301 can be achieved.

In some embodiments of the present application, the end cover assembly 30 further includes a terminal plate 309 and an insulating member 310. The terminal plate 309 is disposed on a side, away from the connecting plate 304, of the end cover 301 and connected to the post terminal 305; the insulating member 310 is disposed surrounding the post terminal 305, and at least part of the insulating member 310 is disposed between the terminal plate 309 and the end cover 301.

Specifically, the terminal plate 309 is made of a conductive material and used for connecting to the post terminal 305 and leading out current in the post terminal 305. An electric device or charging apparatus may be directly connected to the terminal plate 309 to transmit current. The insulating member 310 is used for blocking the current transmission between the terminal plate 309 and the end cover 301, to prevent the current from leaking to the end cover 301 and improving the safety performance.

According to the embodiments of the present application, by providing the terminal plate 309 to fix the post terminal 305, and providing the insulating member 310 to insulate the post terminal 305 and the end cover 301, the electrical energy of the battery cell 7 is prevented from leaking.

In some embodiments of the present application, with reference to Fig. 6 to Fig. 8, the terminal plate 309 is provided with a second through hole 311, the terminal plate 309 includes a first snapping portion 312 protruding from a wall of the second through hole 311 and in an annular shape, the post terminal 305 further includes a second protrusion 313 protruding from the outer peripheral surface of the main body 306 and in an annular shape, and the second protrusion 313 is spaced apart from the first protrusion 307, where the first snapping portion 312 is connected between the first protrusion 307 and the second protrusion 313 in a snap-fit manner.

In some embodiments, the first snapping portion 312 extends into a space between the first protrusion 307 and the second protrusion 313, an end surface of the first snapping portion 312 matches the main body 306 in shape, and the first snapping portion 312 may be disposed to abut against the main body 306.

The above technical solution cancels a step of welding connection between the terminal plate 309 and the post terminal 305. By providing the first snapping portion 312 and the second protrusion 313, the post terminal 305 and the terminal plate 309 are connected in a snap-fit manner, thereby increasing the overcurrent area between the terminal plate 309 and the post terminal 305 and improving the safety of the battery cell 7.

In some embodiments of the present application, with reference to Fig. 8, the insulating member 310 includes a body portion 314 and a blocking portion 315, at least part of the body portion 314 is disposed between the terminal plate 309 and the end cover 301, and the blocking portion 315 protrudes from a side, away from the terminal plate 309, of the body portion 314, extends into the first through hole 303, and is disposed between the end cover 301 and the post terminal 305. Since the blocking portion 315 extends into the first through hole 303 and is disposed between the end cover 301 and the post terminal 305, the insulating performance between the terminal plate 309 and the post terminal 305 can be improved.

In some embodiments of the present application, the blocking portion 315 extends axially along the first through hole 303 and abuts against the sealing member 308. The above configuration further enhances the blocking between the end cover 301 and the post terminal 305 and improves the insulating effect.

In some embodiments of the present application, the sealing member 308 includes a sealing portion disposed between the post terminal 305 and the end cover 301 and a connecting portion disposed surrounding an outer periphery of the sealing portion, and at least part of the connecting portion is disposed between the end cover 301 and the connecting plate 304. In the above configuration, the connecting portion is disposed between the end cover 301 and the connecting plate 304, thereby achieving insulation between the end cover 301 and the connecting plate 304.

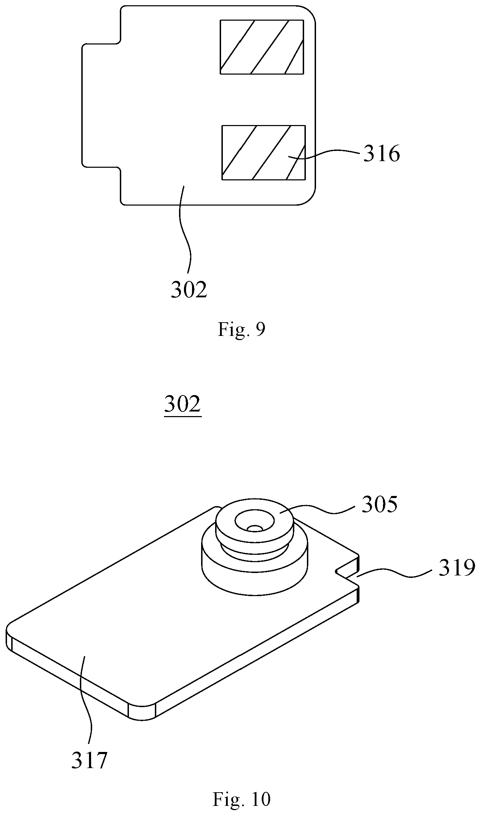

In some embodiments of the present application, as shown in Fig. 9, a welding region 316 is disposed on a side, away from the end cover 301, of the connecting plate 304, and the welding region 316 is connected to the tab of the electrode assembly 11. The welding region 316 may be of a planar structure. Optionally, a plurality of welding protrusions may be disposed on the welding region 316 to increase a surface area of the welding region 316, improve the area of connection between the welding region 316 and the tab, and improve the firmness of welding.

In the above configuration, the welding region 316 is disposed on the connecting plate 304 to connect the connecting plate 304 with the tab, so as to improve the stability of connection.

In some embodiments of the present application, as shown in Fig. 10, the connecting plate 304 includes an extension portion 317 extending outward in a length or width direction of the end cover 301 from one side of the connecting plate 304. In some embodiments, at least part of the welding region 316 is disposed at the extension portion 317. Through the extension portion 317, the above configuration effectively increases the welding area of the tab, increases the overcurrent area of the electrode leading-out member 302, and improves the efficiency of connection between the tab and the connecting plate 304 and the structural stability.

In some embodiments of the present application, a distance between an axis of the post terminal 305 and a geometric center of the connecting plate 304 in the length direction of the end cover 301 is greater than zero. By eccentrically disposing the post terminal 305 on the connecting plate 304, the space of the end cover assembly 30 can be fully used to dispose the connecting plate 304, the area of the connecting plate 304 is increased, and the stability of connection between the tab and the connecting plate 304 can be improved.

In some embodiments of the present application, the extension portion 317 extends in the length direction of the end cover 301 from one side of the connecting plate 304; in the length direction of the end cover 301, the connecting plate 304 includes a first edge and a second edge opposite each other, the first edge is located in the extension portion 317, and a distance between the first edge and the axis of the post terminal 305 is greater than that between the second edge and the axis of the post terminal 305, so that the connecting plate 304 is eccentrically disposed relative to the post terminal 305. By eccentrically disposing the connecting plate 304 relative to the post terminal 305, it can effectively use the space between the electrode assembly and the end cover 301, increase the welding area of the tab, ensure the stability of tab connection, increase the overcurrent area, reduce internal resistance and temperature rise, and improve the stability and safety of the battery cell 7.

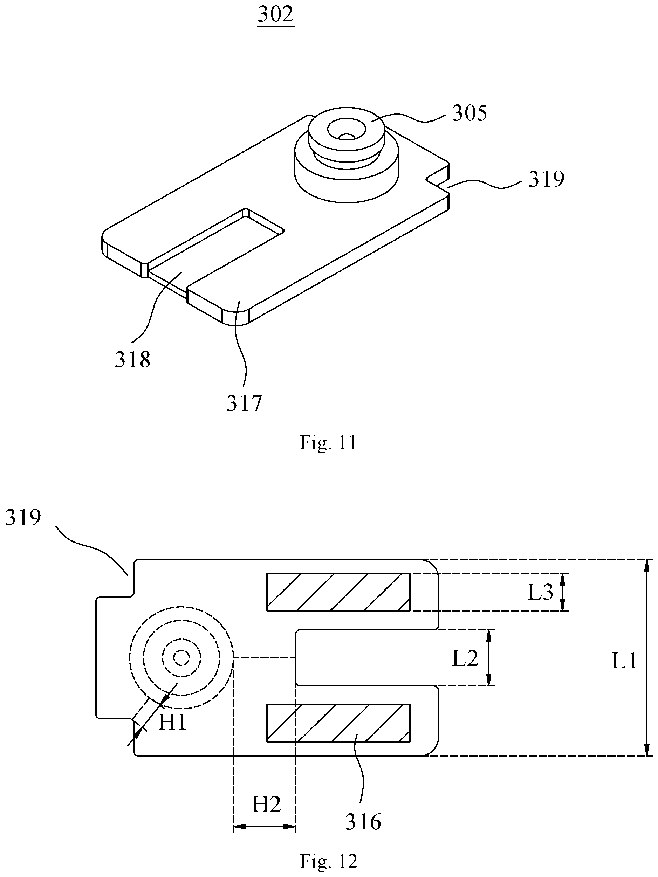

As shown in Fig. 11, in some embodiments of the present application, the extension portion 317 is provided with a first weight reduction portion 318, and a thickness of the first weight reduction portion 318 is less than that of the connecting plate 304. By providing the first weight reduction portion 318, it can effectively reduce the weight of the extension portion 317 and increase the energy density of the battery cell 7.

In some embodiments of the present application, as shown in Fig. 10 and Fig. 11, an edge of the connecting plate 304 is recessed inward to form a second weight reduction portion 319. The second weight reduction portion 319 effectively reduces the weight of the extension portion 317. Moreover, the above technical solution is simple in structure and easy to implement.

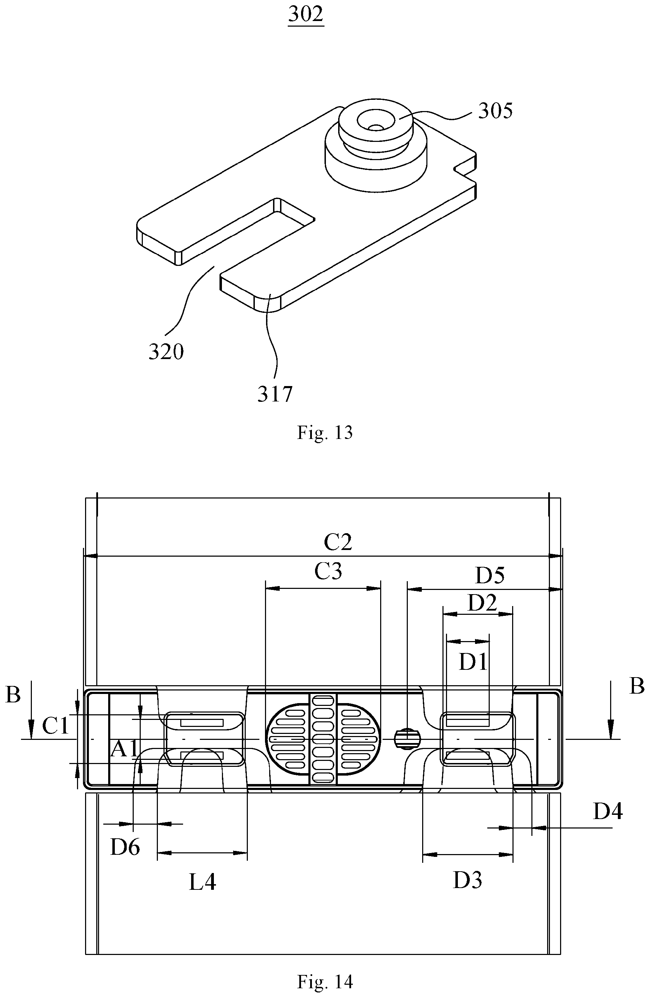

In some embodiments of the present application, as shown in Fig. 13, an edge of the extension portion 317 is recessed inward to form a third weight reduction portion 320. The above technical solution is simple in structure and easy to implement.

In some embodiments of the present application, with combined reference to Fig. 12 and Fig. 13, a minimum distance H2 between the third weight reduction portion 320 and the post terminal 305 satisfies a relationship of $H2 \geq 2$ mm. The third weight reduction portion 320 is of an inward recessed structure, and H2 may be the minimum distance between an edge of the third weight reduction portion 320 and an outer peripheral surface of the post terminal 305.

In the embodiments of the present application, by providing the range of the minimum distance between the third weight reduction portion 320 and the post terminal 305, it can ensure the overcurrent area of the connecting plate 304, while reducing the overall weight of the electrode leading-out member 302 and increasing the energy density of the battery cell 7.

In some embodiments of the present application, in the width direction of the end cover 301, an extension length L1 of the connecting plate 304, an extension length L2 of the third weight reduction portion 320, and an extension length L3 of the welding region 316 satisfy a relationship: $L2 \leq L1 - 2(L3 + 3 \text{ mm})$.

The above technical solution can ensure the welding area of the welding region 316, improve the stability of connection between the tab and the electrode leading-out member 302, ensure the overcurrent area, and reduce internal resistance and temperature rise. Meanwhile, the weight of the connecting plate 304 is reduced to achieve the technical effects of reasonably reducing the weight and increasing the energy density of the battery cell 7.

In some embodiments of the present application, with reference to Fig. 4, the end cover assembly 30 further includes an insulating plate 321, which is provided with a third through hole 322, at least part of the post terminal 305 is disposed in the third through hole 322, the insulating plate 321 is disposed on a side, facing the electrode assembly 11, of the end cover 301, and at least part of the insulating plate 321 is disposed between the connecting plate 304 and the end cover 301. By providing the insulating plate 321, the insulation between the end cover 301 and the electrode assembly 11 can be achieved, thereby improving the safety performance of the battery cell 7.

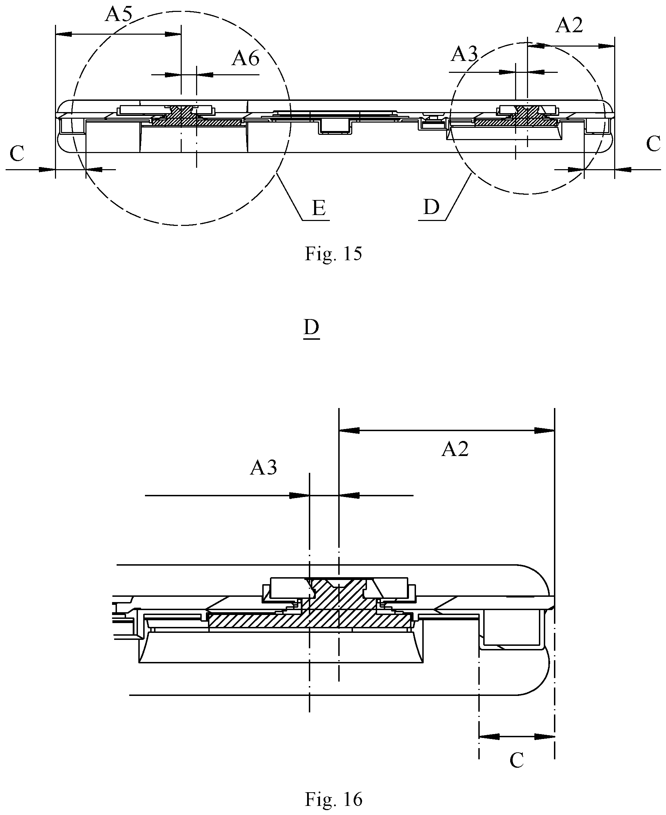

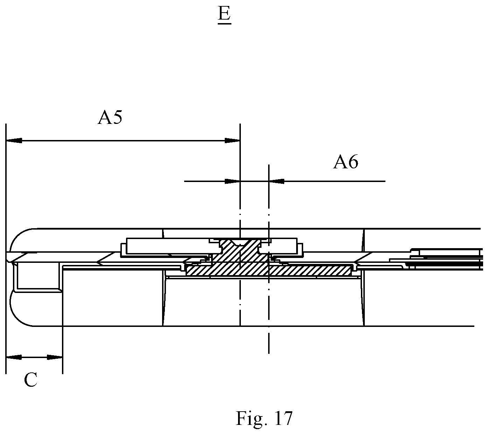

Continue to refer to Fig. 14 to Fig. 17, where Fig. 14 is a schematic structural diagram of an end cover assembly provided in some embodiments of the present application; Fig. 15 is a cross-sectional structural diagram taken along line B-B in Fig. 14; Fig. 16 is an enlarged schematic diagram of a circular frame D in Fig. 15; Fig. 17 is an enlarged schematic diagram of a circular frame E in Fig. 15.

In some embodiments of the present application, edges on two opposite sides of the insulating plate 321 extend towards the electrode assembly to form protruding portions 323. By providing the protruding portions 323 on the two sides of the insulating plate 321, an accommodating space between the end cover 301 and the electrode assembly can be defined and the movement of the electrode assembly towards the end cover 301 can be limited. The above accommodating space facilitates the setting of the connecting plate 304 and further ensures the safety of the battery cell 7.

In some embodiments of the present application, a maximum distance between a projection of the protruding portion 323 on the end cover 301 and an edge of the end cover 301 is C, and $C \geq 8.5$ mm. The distance C determines an extension length of the protruding portion 323 in the length direction of the end cover 301, and excluding the thickness of 1.5 mm of the edge of the end cover, the extension length of the protruding portion 323 in the length direction of the end cover 301 is greater than or equal to 7 mm. When the extension length of the protruding portion 323 is too small, it may cut and thus damage the electrode assembly; therefore, a reasonable length of the protruding portion 323 can ensure the safety performance of the electrode assembly.

In some embodiments of the present application, in the width direction of the end cover 301, an extension length of the connecting plate 304 is C1, two welding regions are provided and disposed in the width direction of the end cover 301, a maximum distance between the two welding regions 316 in the width direction of the end cover 301 is A1, and $C1 \geq A1 + 4$ mm. According to the above technical solution, a reasonable length of a non-welding region on the connecting plate 304 is provided, which reserves a sufficient margin for a press fitting process of the electrode assembly, thereby ensuring smooth assembly of the electrode assembly and improving the safety performance of the battery cell.

In some embodiments of the present application, in the length direction of the end cover 301, an extension length of the welding region 316 is D1, an extension length of the tab is D3, the tab is a positive electrode tab, an extension length of the connecting plate is D2, and $D3 \geq D2 \geq D1 + 4$ mm. The extension length D3 of the tab is a maximum extension length of the tab in the length direction of the end cover 301.

In the above configuration, the extension length of the tab is greater than the length of the connecting plate, which can improve the convenience of connection for the tab, while reducing the occupied space and weight of the connecting plate and ensuring the energy density of the battery cell. In addition, the length of the connecting plate is greater than that of the welding region, which reserves a sufficient margin for the press fitting process of the electrode assembly, to ensure smooth assembly of the electrode assembly and improve the safety performance of the battery cell.

In some embodiments of the present application, in the length direction of the end cover 301, a maximum distance between orthogonal projections of edges of two tabs on the end cover is D4, and $D1 \geq (D3 - 2D4)/0.8$. The above length of the welding region comprehensively considers maximum misalignment between the tabs and the length of each tab, and can ensure that all of the stacked tabs can be stably connected to the connecting plate.

In some embodiments of the present application, the end cover 301 is further provided with a liquid injection hole, a distance between a center of the liquid injection hole and the edge of the end cover is D5, a distance between a center of the post terminal and the edge of the end cover is A2, the post terminal is a positive post terminal, and a minimum distance between the center of the post terminal and a centerline of the connecting plate is A3, where $D5 - 0.5D2 - A2 - 3 \text{ mm} \geq A3 \geq A + D4 + 0.5D3 - A2$.

The above technical solution comprehensively considers the position of the liquid injection hole, the eccentric distance between the post terminal and the connecting plate, and the maximum misalignment of the two positive tabs, so as to reasonably set the diameter of the positive post terminal, reduce the probability of interference between the positive post terminal and the liquid injection hole, and ensure that the connecting plate does not exceed the edge of the end cover.

In some embodiments of the present application, two electrode leading-out members 302 are provided, which are respectively a first electrode leading-out member and a second electrode leading-out member, a pressure relief mechanism is further disposed between the first electrode leading-out member and the second electrode leading-out member, the first electrode leading-out member includes a first connecting plate and a first post terminal, and the second electrode leading-out member includes a second connecting plate and a second post terminal.

A length of the end cover is C2, an extension length of the pressure relief mechanism 24 in the length direction of the end cover is C3, a minimum distance between a centerline of the first connecting plate and the edge of the end cover is A5 (L5), a minimum distance between a center of the first post terminal and the centerline of the first connecting plate is A6, an extension length of a second tab in the length direction of the end cover is L4, a maximum distance between orthogonal projections of edges of two second tabs on the end cover in the length direction of the end cover is D6, and $0.5(C2 - C3) - A5 - 0.5L4 - 3 \text{ mm} \geq A6 \geq A + L4 + 0.5D6 - A5$.

The above technical solution comprehensively considers the length of the end cover, the extension length of the pressure relief mechanism, the lengths of the tabs, and the maximum misalignment of a plurality of second tabs, so as to set a reasonable diameter of the second post terminal, reduce the probability of interference between the second post terminal and the pressure relief mechanism, and ensure that the second connecting plate does not exceed the edge of the end cover.

An embodiment of the present application further provides a battery cell 7, including the end cover assembly 30 in the foregoing embodiments. An embodiment of the present application further provides a battery 2, including the battery cell 7 in the foregoing embodiments. An embodiment of the present application further provides an electric apparatus, including the battery 2 in the foregoing embodiments, where the battery 2 is used for providing electrical energy.

The technical solutions described in the embodiments of the present application are applicable to the battery 2 and the electric apparatus using the battery 2. The electric apparatus may be a vehicle 1, a mobile phone, a portable device, a notebook computer, a ship, a spacecraft, an electric toy, an electric tool, or the like. The vehicle 1 may be a fuel vehicle, a gas vehicle, or a new energy vehicle. The new energy vehicle may be a pure electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the foregoing electric apparatus.

The end cover assembly 30 in the embodiments of the present application cancels an adapter structure, and the connecting plate 304 and the post terminal 305 are disposed as an integrally formed structure, which increases contact area between a post and a tab, expands overcurrent area between the post terminal 305 and the connecting plate 304, reduces internal resistance, lowers temperature rise, and improves the safety performance of the battery cell 7. Moreover, the welding process is reduced, and the production efficiency of the battery cell 7 is improved. Therefore, the battery cell 7, the battery 2, and the electric apparatus provided in the embodiments of the present application can also achieve the above technical effects due to the end cover assembly 30, which will not be described here.

Although the present application is already described with reference to the preferred embodiments, various improvements can be made and components therein can be replaced with equivalents without departing from the scope of the present application. In particular, as long as there is no structural conflict, the various technical features mentioned in the embodiments can be combined in any way. The present application is not limited to the specific embodiments disclosed herein, but includes all technical solutions falling within the scope of the claims.

**Claims**

1. An end cover assembly (30), comprising:

   an end cover (301) provided with a first through hole (303); and
   an electrode leading-out member (302) comprising a connecting plate (304) and a post terminal (305) protruding from a surface of the connecting plate (304), at least part of the post terminal (305) disposed in the first through hole (303), and the connecting plate (304) located on one side of the end cover (301), wherein the connecting plate (304) is configured to be connected to a tab of an electrode assembly (11).

2. The end cover assembly (30) according to claim 1, wherein the connecting plate (304) and the post terminal (305) are integrally formed, and the connecting plate (304) is provided with a welding region (316), the welding region (316) configured to be connected to the tab.

3. The end cover assembly (30) according to claim 2, wherein the post terminal (305) comprises a main body (306) extending in a thickness direction of the end cover (301) and a first protrusion (307) protruding from an outer peripheral surface of the main body (306) along a radial direction of the main body (306), and at least part of the first protrusion (307) is disposed in the first through hole (303).

4. The end cover assembly (30) according to claim 3, wherein the first protrusion (307) is disposed surrounding an entire circumference of the main body (306).

5. The end cover assembly (30) according to claim 3 or 4, wherein the end cover assembly (30) further comprises a sealing member (308) disposed at least partially surrounding an outer periphery of the first protrusion (307), and at least part of the sealing member (308) is disposed in the first through hole (303).

6. The end cover assembly (30) according to claim 5, wherein the end cover assembly (30) further comprises:

a terminal plate (309) disposed on a side, away from the connecting plate (304), of the end cover (301) and connected to the post terminal (305); and
an insulating member (310) disposed surrounding the post terminal (305), at least part of the insulating member (310) disposed between the terminal plate (309) and the end cover (301).

7. The end cover assembly (30) according to claim 6, wherein the terminal plate (309) is provided with a second through hole (311), and comprises a first snapping portion (312) protruding from a wall of the second through hole (311) and having an annular shape, and

the post terminal (305) further comprises a second protrusion (313) protruding from the outer peripheral surface of the main body (306) and having an annular shape, and the second protrusion (313) is spaced apart from the first protrusion (307),
wherein the first snapping portion (312) is connected in a snap-fit manner between the first protrusion (307) and the second protrusion (313).

8. The end cover assembly (30) according to claim 6 or 7, wherein the insulating member (310) comprises a body portion (314) and a blocking portion (315), wherein at least part of the body portion (314) is disposed between the terminal plate (309) and the end cover (301), and the blocking portion (315) protrudes from a side, away from the terminal plate (309), of the body portion (314), extends into the first through hole (303), and is disposed between the end cover (301) and the post terminal (305).

9. The end cover assembly (30) according to claim 8, wherein the blocking portion (315) extends axially along the first through hole (303) and abuts against the sealing member (308).

10. The end cover assembly (30) according to claim 5, wherein the sealing member (308) comprises a sealing portion disposed between the post terminal (305) and the end cover (301) and a connecting portion disposed surrounding an outer periphery of the sealing portion, and at least part of the connecting portion is disposed between the end cover (301) and the connecting plate (304).

11. The end cover assembly (30) according to any one of claims 2 to 10, wherein the connecting plate (304) comprises an extension portion extending outward in a length direction or width direction of the end cover (301) from one side of the connecting plate (304).

12. The end cover assembly (30) according to claim 11, wherein a distance between an axis of the post terminal (305) and a geometric center of the connecting plate (304) in the length direction of the end cover (301) is greater than zero.

13. The end cover assembly (30) according to claim 11 or 12, wherein the extension portion (317) extends in the length direction of the end cover from one side of the connecting plate (304); in the length direction of the end cover (301), the connecting plate (304) comprises a first edge and a second edge opposite each other, the first edge is located in the extension portion (317), and a distance between the first edge and the axis of the post terminal (305) is greater than a distance between the second edge and the axis of the post terminal (305), so that the connecting plate (304) is eccentrically disposed relative to the post terminal (305).

14. The end cover assembly (30) according to any one of claims 11 to 13, wherein the extension portion (317) is provided with a first weight reduction portion (318), and a thickness of the first weight reduction portion (318) is less than a thickness of the connecting plate (304).

15. The end cover assembly (30) according to any one of claims 1 to 14, wherein an edge of the connecting plate (304) is recessed inward to form a second weight reduction portion (319).

16. The end cover assembly (30) according to claim 15, wherein a minimum distance, H1, between the second weight reduction portion (319) and the post terminal (305) satisfies a relationship of H1 ≥ 2 mm.

17. The end cover assembly (30) according to any one of claims 11 to 14, wherein an edge of the extension portion (317) is recessed inward to form a third weight reduction portion (320).

18. The end cover assembly (30) according to claim 17, wherein a minimum distance, H2, between the third weight reduction portion (320) and the post terminal (305) satisfies a relationship of H2 ≥ 2 mm.

19. The end cover assembly (30) according to claim 18, wherein in the width direction of the end cover (301), an extension length, L1, of the connecting plate (304), an extension length, L2, of the third weight reduction portion (320), and an extension length, L3, of the welding region (316) satisfy a relationship:

$$L2 \leq L1 - 2 (L3 + 3 \text{ mm}).$$

20. The end cover assembly (30) according to any one of claims 1 to 19, wherein the end cover assembly (30) further comprises an insulating plate (321), wherein the insulating plate (321) is provided with a third through hole (322), at least part of the post terminal (305) is disposed in the third through hole (322), the insulating plate (321) is disposed on a side, facing the electrode assembly (11), of the end cover (301), and at least part of the insulating plate (321) is disposed between the connecting plate (304) and the end cover (301).

21. The end cover assembly (30) according to claim 20, wherein edges on two opposite sides of the insulating plate (321) extend towards the electrode assembly (11) to form protruding portions (323).

22. The end cover assembly (30) according to any one of claims 3 to 7 and 21, wherein a maximum distance between a projection of the protrusion (323) on the end cover (301) and an edge of the end cover (301) is C, and C ≥ 8.5 mm.

23. The end cover assembly (30) according to claim 2 or 19, wherein in the width direction of the end cover (301), an extension length of the connecting plate (304) is C1, two welding regions (316) are provided and disposed in the width direction of the end cover (301), a maximum distance between the two welding regions (316) in the width direction of the end cover (301) is A1, and C1 ≥ A1 + 4 mm.

24. The end cover assembly (30) according to any one of claims 2, 19 and 23, wherein in the length direction of the end cover (301), an extension length of the welding region (316) is D1, an extension length of the tab is D3, the tab is a positive electrode tab, an extension length of the connecting plate (304) is D2, and D3 ≥ D2 ≥ D1 + 4 mm.

25. The end cover assembly (30) according to any one of claims 1 to 24, wherein in the length direction of the end cover (301), a maximum distance between orthogonal projections of edges of two tabs on the end cover (301) is D4, and D1 ≥ (D3 - 2D4)/ 0.8.

26. The end cover assembly (30) according to any one of claims 1 to 25, wherein the end cover (301) is further provided with a liquid injection hole, a distance between a center of the liquid injection hole and an edge of the end cover (301) is D5, a distance between a center of the post terminal (305) and the edge of the end cover (301) is A2, the post terminal is a positive post terminal, a minimum distance between the center of the post terminal (305) and a centerline of the connecting plate (304) is A3, and

$$D5 - 0.5D2 - A2 - 3 \text{ mm} \geq A3 \geq C + D4 + 0.5D3 - A2.$$

27. The end cover assembly (30) according to any one of claims 1 to 26, wherein two electrode leading-out members (302) are provided, which are respectively a first electrode leading-out member and a second electrode leading-out member, a pressure relief mechanism is further disposed between the first electrode leading-out member and the second electrode leading-out member, the first electrode leading-out member comprises a first connecting plate and a first post terminal, and the second electrode leading-out member comprises a second connecting plate and a second post terminal,

a length of the end cover is C2, an extension length of the pressure relief mechanism in the length direction of the end cover is C3, a minimum distance between a centerline of the first connecting plate and an edge of the end cover is A5, a minimum distance between a center of the first post terminal and the centerline of the first connecting plate is A6, an extension length of a second tab in the length direction of the end cover is L4, a maximum distance between orthogonal projections of edges of two second tabs on the end cover is D6, and

$$0.5(C2 - C3) - A5 - 0.5L4 - 3 \text{ mm} \geq A6 \geq C + L4 + 0.5D6 - A5.$$

28. A battery cell, comprising the end cover assembly (30) according to any one of claims 1 to 27.

29. A battery, comprising the battery cell (7) according to claim 28.

30. An electric apparatus, comprising the battery (2) according to claim 29, wherein the battery (2) is adapted for providing electrical energy.

<u>1</u>

Fig. 1

<u>2</u>

Fig. 2

Fig. 3

30

311 — 309

310

308

303 — 301

322

321

302

323

Fig. 4

302

305

304

Fig. 5

## <u>302</u>

Fig. 6

## <u>30</u>

Fig. 7

## <u>A</u>

Fig. 8

316

302

Fig. 9

302

305

319

317

Fig. 10

302

305

319

318

317

Fig. 11

319

L3

L2

L1

H1

H2

316

Fig. 12

302

305

320

317

Fig. 13

C2

C3

D5

D2

D1

B

C1

B

A1

D4

D6

L4

D3

Fig. 14

Fig. 15

D

Fig. 16

Fig. 17

| | | |
|---|---|---|
| **INTERNATIONAL SEARCH REPORT** | International application No. | |
| | **PCT/CN2022/130212** | |

**A.    CLASSIFICATION OF SUBJECT MATTER**

H01M50/531(2021.01)i;H01M50/543(2021.01)i;H01M50/147(2021.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 电极, 极耳, 极柱, 端子, 盖, 焊接, 连接, 转接, 一体成型, battery, cell, electrode, tab, pole, terminal, cover, lid, weld+, connect+, integrated, form+, mold+

**C.    DOCUMENTS CONSIDERED TO BE RELEVANT**

| Category* | Citation of document, with indication, where appropriate, of the relevant passages | Relevant to claim No. |
|---|---|---|
| PX | CN 115000641 A (CONTEMPORARY AMPEREX TECHNOLOGY LTD. (JIANGSU) et al.) 02 September 2022 (2022-09-02) description, paragraphs 0004-0100, and figures 3-13 | 1-30 |
| X | CN 216958265 U (ZHONGCHUANG XINHANG TECHNOLOGY CO., LTD.) 12 July 2022 (2022-07-12) description, paragraphs 0003-0085, and figures 1-9 | 1-14, 20-22, 28-30 |
| Y | CN 216958265 U (ZHONGCHUANG XINHANG TECHNOLOGY CO., LTD.) 12 July 2022 (2022-07-12) description, paragraphs 0003-0085, and figures 1-9 | 15-30 |
| Y | CN 216120646 U (XIAMEN HAICHEN NEW ENERGY TECHNOLOGY CO., LTD.) 22 March 2022 (2022-03-22) description, paragraphs 0003-0079, and figures 1-11 | 12-30 |
| X | CN 110783503 A (JIANGXI GANFENG CELL TECHNOLOGY CO., TLD.) 11 February 2020 (2020-02-11) description, paragraphs 0003-0041, and figures 1-6 | 1-14, 20-22, 28-30 |

☑ Further documents are listed in the continuation of Box C.       ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **30 March 2023** | **06 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/130212** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 110783503 A (JIANGXI GANFENG CELL TECHNOLOGY CO., TLD.) 11 February 2020 (2020-02-11)<br>description, paragraphs 0003-0041, and figures 1-6 | 15-30 |
| X | CN 204946996 U (CONTEMPORARY AMPEREX TECHNOLOGY CO., LTD.) 06 January 2016 (2016-01-06)<br>description, paragraphs 0004-0044, and figures 2-7 | 1-13, 20-22, 28-30 |
| Y | CN 204946996 U (CONTEMPORARY AMPEREX TECHNOLOGY CO., LTD.) 06 January 2016 (2016-01-06)<br>description, paragraphs 0004-0044, and figures 2-7 | 14-30 |
| X | CN 110892546 A (ROBERT BOSCH GMBH et al.) 17 March 2020 (2020-03-17)<br>description, paragraphs 009-0047, and figures 1-4 | 1-11, 20-22, 28-30 |
| Y | CN 110892546 A (ROBERT BOSCH GMBH et al.) 17 March 2020 (2020-03-17)<br>description, paragraphs 009-0047, and figures 1-4 | 12-30 |

Form PCT/ISA/210 (second sheet) (July 2022)

**INTERNATIONAL SEARCH REPORT**
Information on patent family members

International application No.

**PCT/CN2022/130212**

| Patent document cited in search report | | | Publication date (day/month/year) | Patent family member(s) | | | Publication date (day/month/year) |
|---|---|---|---|---|---|---|---|
| CN | 115000641 | A | 02 September 2022 | None | | | |
| CN | 216958265 | U | 12 July 2022 | None | | | |
| CN | 216120646 | U | 22 March 2022 | None | | | |
| CN | 110783503 | A | 11 February 2020 | None | | | |
| CN | 204946996 | U | 06 January 2016 | None | | | |
| CN | 110892546 | A | 17 March 2020 | US | 2020227693 | A1 | 16 July 2020 |
| | | | | US | 11329337 | B2 | 10 May 2022 |
| | | | | WO | 2019025235 | A1 | 07 February 2019 |
| | | | | DE | 112018003895 | T5 | 16 April 2020 |
| | | | | US | 2022238946 | A1 | 28 July 2022 |
| | | | | JP | 2021180183 | A | 18 November 2021 |
| | | | | JP | 7162706 | B2 | 28 October 2022 |
| | | | | JP | 2019029225 | A | 21 February 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210929978